# EUROPEAN PATENT APPLICATION

(11) **EP 4 507 114 A1**
(43) Date of publication of application: **12.02.2025**
(21) Application number: 23787372.4
(22) Date of filing: 28.01.2023
(51) Int. Cl.: H01M 50/54, H01M 10/02

(54) **LAMINATED ELECTRODE ASSEMBLY, BATTERY CELL, BATTERY, AND ELECTRIC APPARATUS**

(30) Priority: 15.04.2022 CN 202210392427
(71) Applicant: Contemporary Amperex Technology Co., Limited, Ningde, Fujian 352100 (CN)
(72) Inventor: WANG, Weiwei, Ningde, Fujian 352100 (CN); LIN, Jiang, Ningde, Fujian 352100 (CN); CHENG, Qi, Ningde, Fujian 352100 (CN); LIN, Chuandong, Ningde, Fujian 352100 (CN); HUANG, Quanzhuang, Ningde, Fujian 352100 (CN)
(74) Representative: von Tietzen und Hennig, Nikolaus
(86) International application number: PCT/CN2023/073598
(87) International publication number: WO 2023/197724

(57) **Abstract**

This application provides a stacked-type electrode assembly, a battery cell, a battery, and an electrical device, and relates to the technical field of batteries. The stacked-type electrode assembly includes a first electrode plate and a second electrode plate of opposite polarities. The first electrode plate and the second electrode plate are stacked along a first direction. The first electrode plate includes a first coated region and a first blank region arranged along a second direction. The first blank region includes a first connecting portion and a first tab portion. The first connecting portion connects the first coated region and the first tab portion. A dimension of the first connecting portion is larger than a dimension of the first tab portion along a third direction. The first direction, the second direction, and the third direction are perpendicular to each other. The first connecting portions of a plurality of first electrode plates converge at one end of the stacked-type electrode assembly in the second direction to form a first convergence region. The first tab portions of the plurality of first electrode plates are stacked and protrude beyond the first convergence region along the second direction. This stacked-type electrode assembly exhibits relatively high current-carrying performance, and the toughness and stability of the first tab portion are relatively high.

## Description

### CROSS-REFERENCE TO RELATED APPLICATIONS

This application claims priority to Chinese Patent Application No. 202210392427.5, filed on April 15, 2022 and entitled "STACKED-TYPE ELECTRODE ASSEMBLY, BATTERY CELL, BATTERY, AND ELECTRICAL DEVICE", which is incorporated herein by reference in its entirety.

### TECHNICAL FIELD

This application relates to the technical field of batteries, and in particular, to a stacked-type electrode assembly, a battery cell, a battery, and an electrical device.

### BACKGROUND

In recent years, new energy vehicles have developed by leaps and bounds. In the field of electric vehicles, power batteries play an essential and irreplaceable role as a power source of electric vehicles. A battery includes a box and a plurality of battery cells accommodated in the box. A battery cell is prepared by winding, stacking, or otherwise assembling a positive electrode plate, a negative electrode plate, and a separator to form an electrode assembly (bare cell), putting the electrode assembly into a housing, capping off an end cap, and finally injecting an electrolyte solution. However, with the continuous development of battery technology, higher requirements are also being placed on the cycle life, safety, and other performance metrics of the battery in use. On the other hand, the cycle life of the battery in the prior art is relatively short, and the battery in subsequent use still poses considerable safety hazards, thereby impairing the safety for consumers.

### SUMMARY

Some embodiments of this application provide a stacked-type electrode assembly, a battery cell, a battery, and an electrical device to effectively reduce the safety hazards of a battery in subsequent use.

According to a first aspect, an embodiment of this application provides a stacked-type electrode assembly. The stacked-type electrode assembly includes a first electrode plate and a second electrode plate of opposite polarities. The first electrode plate and the second electrode plate are stacked along a first direction. The first electrode plate includes a first coated region and a first blank region arranged along a second direction. The first blank region includes a first connecting portion and a first tab portion. The first connecting portion connects the first coated region and the first tab portion. A dimension of the first connecting portion is larger than a dimension of the first tab portion along a third direction. The first direction, the second direction, and the third direction are perpendicular to each other. The first connecting portions of a plurality of first electrode plates converge at one end of the stacked-type electrode assembly in the second direction to form a first convergence region. The first tab portions of the plurality of first electrode plates are stacked and protrude beyond the first convergence region along the second direction.

In the above technical solution, the first electrode plate includes a first coated region and a first blank region arranged along the second direction. A first connecting portion and a first tab portion connected to each other are formed in the first blank region. The first connecting portions of a plurality of first electrode plates converge at one end of the stacked-type electrode assembly in the second direction, so that the first convergence region formed by the plurality of first connecting portions can cover one end of the stacked-type electrode assembly. The first tab portions of a plurality of first electrode plates are stacked and then protrude beyond the first convergence region, so that the first tab portions can input or output the electrical energy of the stacked-type electrode assembly through the first convergence region. Such a structure of the stacked-type electrode assembly can, on the one hand, effectively improve the current-carrying performance of the first blank region of the first electrode plate, so as to ensure stability of the current flow, and in turn, favorably improve the working performance of the stacked-type electrode assembly and alleviate the phenomenon of a local temperature rise caused by a deficient flow area of the stacked-type electrode assembly. On the other hand, such a structure can effectively improve the toughness and structural stability of the first tab portion, so as to reduce the risk of breakage of the first tab portion during production or use, and in turn, increase the service life of the stacked-type electrode assembly.

In some embodiments, the stacked-type electrode assembly further includes a separation piece. The separation piece is disposed between the first electrode plate and the second electrode plate, and is configured to separate the first electrode plate from the second electrode plate. The separation piece covers the first coated region along the first direction. The first connecting portion protrudes beyond the separation piece along the second direction.

In the above technical solution, the first connecting portion protrudes beyond the separation piece along the second direction. In other words, the first blank region of the first electrode plate extends out of one end of the separation piece along the second direction. On the one hand, this structure of the stacked-type electrode assembly makes it convenient for the first connecting portions of a plurality of first electrode plates to converge at one end of the stacked-type electrode assembly in the second direction, and facilitates manufacturing and production. On the other hand, by virtue of this structure, a plurality of first electrode plates can be stacked first and then cut uniformly to form a first convergence region and a plurality of stacked first tab portions, thereby improving the production efficiency of the stacked-type electrode assembly.

In some other embodiments, a thickness of the first convergence region in the second direction is 2 mm to 4 mm.

In the above technical solution, the thickness of the first convergence region is set between 2 mm and 4 mm. On the one hand, this setting can effectively alleviate the risk of low structural strength and insufficient flow area between the first convergence region and the first tab portion caused by a deficient thickness of the first convergence region. On the other hand, this setting can effectively alleviate the phenomenon of an excessive footprint of the stacked-type electrode assembly caused by an excessive thickness of the first convergence region, thereby increasing the energy density of the stacked-type electrode assembly.

In some embodiments, the second electrode plate includes a second coated region and a second blank region arranged along the second direction. The second blank region includes a second connecting portion and a second tab portion. The second connecting portion connects the second coated region and the second tab portion. A dimension of the second connecting portion is larger than a dimension of the second tab portion along the third direction. The second connecting portions of a plurality of second electrode plates converge at one end of the stacked-type electrode assembly in the second direction to form a second convergence region, where the end is oriented away from the first convergence region. The second tab portions of the plurality of second electrode plates are stacked and protrude as a whole beyond the second convergence region along the second direction.

In the above technical solution, the second connecting portions of a plurality of second electrode plates are set to converge at one end of the stacked-type electrode assembly in the second direction, where the end is oriented away from the first convergence region. In this way, the second convergence region formed by the plurality of second connecting portions covers one end of the stacked-type electrode assembly. The second tab portions of a plurality of second electrode plates are stacked and then protrude beyond the second convergence region. The stacked-type electrode assembly that assumes this structure can effectively improve the current-carrying performance of the second blank region of the second electrode plate, so as to ensure stability of the current flow. In addition, such a structure can favorably improve the toughness and structural stability of the second tab portion, so as to reduce the risk of breakage of the second tab portion during production or use, and in turn, further increase the overall structural stability and working performance of the stacked-type electrode assembly.

In some embodiments, the second electrode plate includes a second coated region and a second blank region arranged along the third direction. The second blank region includes a second connecting portion and a second tab portion. The second connecting portion connects the second coated region and the second tab portion. A dimension of the second connecting portion is larger than a dimension of the second tab portion along the second direction. The second connecting portions of a plurality of second electrode plates converge at one end of the stacked-type electrode assembly in the third direction to form a second convergence region. The second tab portions of the plurality of second electrode plates are stacked and protrude as a whole beyond the second convergence region along the third direction.

In the above technical solution, the second coated region and the second blank region of the second electrode plate are arranged along the third direction. In this way, the second convergence region is located at one end of the stacked-type electrode assembly in the third direction, so that the second convergence region and a plurality of stacked second tab portions can be arranged adjacent to the first convergence region, thereby facilitating diversification of the structure of the stacked-type electrode assembly to meet different usage scenarios.

According to a second aspect, an embodiment of this application further provides a battery cell. The battery cell includes a shell and the above stacked-type electrode assembly. The stacked-type electrode assembly is accommodated in the shell.

In some embodiments, the battery cell further includes a first insulation piece. The first insulation piece covers the first convergence region. The first insulation piece is configured to insulate the first tab portion from the shell.

In the above technical solution, the first insulation piece is disposed at one end of the stacked-type electrode assembly so that the first insulation piece can cover the first convergence region. In this way, the first insulation piece can dielectrically isolate the first tab portion from the shell on the one hand, so as to reduce the phenomena of a lap-joint or short circuit between the first tab portion and the shell. On the other hand, this arrangement can isolate the first convergence region from the shell, thereby improving the safety of the battery cell in use.

In some embodiments, along the first direction, the first connecting portions of a plurality of first electrode plates converge from one side toward an opposite side of the stacked-type electrode assembly to form a first bevel face in the first convergence region. The first insulation piece covers the first bevel face.

In the above technical solution, the first connecting portions of a plurality of first electrode plates converge toward one side of the stacked-type electrode assembly along the first direction, so as to converge the plurality of first connecting portions at one end of the stacked-type electrode assembly to form a first convergence region. In addition, a matching first insulation piece covers the first bevel face of the first convergence region correspondingly to implement dielectrical isolation between the first tab portion and the shell and between the first convergence region and the shell. Such a structure of the battery cell can reduce the manufacturing difficulty of the first insulation piece, reduce the manufacturing cost, and improve the production efficiency.

In some embodiments, along the first direction, the first connecting portions of a plurality of first electrode plates converge from both sides of the stacked-type electrode assembly toward a middle of the electrode assembly to form two second bevel faces in the first convergence region. The first insulation piece covers the two second bevel faces.

In the above technical solution, the first connecting portions of a plurality of first electrode plates converge toward the middle of the stacked-type electrode assembly along the first direction, so as to converge the plurality of first connecting portions at one end of the stacked-type electrode assembly to form a first convergence region. In addition, a matching first insulation piece covers the two second bevel faces of the first convergence region correspondingly to implement dielectrical isolation between the first tab portion and the shell and between the first convergence region and the shell. Such a structure of the battery cell can reduce the manufacturing difficulty of the first convergence region, and facilitate electrical connection between the first tab portion and the electrode terminal on the shell.

In some embodiments, the first insulation piece includes two first insulators. The two first insulators cover the two second bevel faces respectively. The two first insulators are arranged opposite to each other along the first direction and are spliced with each other. A first clearance is formed between the two first insulators and is available for the first tab portion to pass through.

In the above technical solution, the first insulation piece includes two first insulators. Each first insulator can cover the corresponding second bevel face, so that the first insulation piece can cover the two second bevel faces. The structure is simple and easy to implement. In addition, the two first insulators are spliced together along the first direction, and a first clearance is formed between the two first insulators and is available for the first tab portion to pass through. Such a structure of the first insulation piece is easy to manufacture and assemble, and facilitates subsequent maintenance and replacement.

According to a third aspect, an embodiment of this application further provides a battery. The battery includes at least one battery cell disclosed above.

According to a fourth aspect, an embodiment of this application further provides an electrical device. The electrical device includes the battery disclosed above. The battery is configured to provide electrical energy.

According to a fifth aspect, an embodiment of this application further provides a method for manufacturing a stacked-type electrode assembly. The method includes: stacking a first electrode plate and a second electrode plate of opposite polarities along a first direction, where the first electrode plate includes a first coated region and a first blank region arranged along a second direction, and the second direction is perpendicular to the first direction; and converging and cutting the first blank regions of a plurality of first electrode plates.

In the above technical solution, after the first electrode plate and the second electrode plate are stacked together, the first blank regions of the plurality of first electrode plates are converged and then the first blank regions of the plurality of first electrode plates are cut uniformly to form tabs configured to output or input the electrical energy of the stacked-type electrode assembly, thereby eliminating the process of cutting individual first electrode plates before stacking the first electrode plate and the second electrode plate. This manufacturing method can effectively reduce the phenomena of dislocation or lap-joint of a plurality of first electrode plates on the one hand, thereby improving the working performance and safety performance of the stacked-type electrode assembly. On the other hand, this method can significantly optimize the production rhythm of the stacked-type electrode assembly, and improve the production efficiency of the stacked-type electrode assembly.

In some embodiments, the converging and cutting the first blank regions of a plurality of first electrode plates include: converging the first blank regions of a plurality of first electrode plates; welding the first blank regions of the plurality of first electrode plates to form a to-be-cut portion; and cutting the to-be-cut portion.

In the above technical solution, a plurality of converged first blank regions are welded to form a to-be-cut portion, and then the to-be-cut portion are uniformly cut. On the one hand, this manufacturing method facilitates the cutting of the to-be-cut portion, thereby reducing the difficulty of cutting. On the other hand, the method can effectively reduce the phenomena of slippage or dislocation of the plurality of converged first blank regions during the cutting, thereby improving the cutting quality of the plurality of first blank regions, and in turn, improving the production quality of the stacked-type electrode assembly.

In some embodiments, after the first blank regions of a plurality of first electrode plates are converged and cut, the first blank region forms a first connecting portion and a first tab portion. The first connecting portion connects the first coated region and the first tab portion. A dimension of the first connecting portion is larger than a dimension of the first tab portion along a third direction. The third direction is perpendicular to the first direction and the second direction. The first connecting portions of a plurality of first electrode plates converge at one end of the stacked-type electrode assembly in the second direction to form a first convergence region. The first tab portions of the plurality of first electrode plates are stacked and protrude as a whole beyond the first convergence region along the second direction.

In the above technical solution, a first connecting portion and a first tab portion connected to each other are formed in the cut first blank region. The first connecting portions of a plurality of blank regions converge at one end of the stacked-type electrode assembly to form a first convergence region. A plurality of first tab portions are stacked together and protrude beyond the first convergence region. In this way, the resultant stacked-type electrode assembly is endowed with good current-carrying performance and high structural stability.

### BRIEF DESCRIPTION OF DRAWINGS

To describe technical solutions in embodiments of this application more clearly, the following outlines the drawings to be used in the embodiments. Understandably, the following drawings show merely some embodiments of this application, and therefore, are not intended to limit the scope. A person of ordinary skill in the art may derive other related drawings from the drawings without making any creative efforts.
FIG. 1 is a schematic structural diagram of a vehicle according to some embodiments of this application;
FIG. 2 is an exploded view of a battery according to some embodiments of this application;
FIG. 3 is an exploded view of a battery cell according to some embodiments of this application;
FIG. 4 is a cross-sectional view of a stacked-type electrode assembly according to some embodiments of this application;
FIG. 5 is a schematic structural diagram of a first electrode plate according to some embodiments of this application;
FIG. 6 is a schematic structural diagram of a stacked-type electrode assembly according to some embodiments of this application;
FIG. 7 is a schematic structural diagram of a second electrode plate according to some embodiments of this application;
FIG. 8 is a schematic structural diagram of a first convergence region of a stacked-type electrode assembly according to some embodiments of this application;
FIG. 9 is a schematic diagram of connection between a first convergence region and a first insulation piece according to some embodiments of this application;
FIG. 10 is a schematic structural diagram of a first insulation piece according to some embodiments of this application;
FIG. 11 is a schematic structural diagram of a first convergence region of a stacked-type electrode assembly according to some other embodiments of this application;
FIG. 12 is a schematic diagram of connection between a first convergence region and a first insulation piece according to some other embodiments of this application;
FIG. 13 is an exploded view of a first insulation piece according to some other embodiments of this application;
FIG. 14 is a schematic structural diagram of a second convergence region of a stacked-type electrode assembly according to some embodiments of this application;
FIG. 15 is a schematic diagram of connection between a second convergence region and a second insulation piece according to some embodiments of this application;
FIG. 16 is an exploded view of a second insulation piece according to some embodiments of this application;
FIG. 17 is a schematic structural diagram of a second convergence region of a stacked-type electrode assembly according to some other embodiments of this application;
FIG. 18 is a schematic diagram of connection between a second convergence region and a second insulation piece according to some other embodiments of this application;
FIG. 19 is a schematic structural diagram of a second insulation piece according to some other embodiments of this application;
FIG. 20 is a schematic flowchart of a method for manufacturing a stacked-type electrode assembly according to some embodiments of this application; and
FIG. 21 is a schematic flowchart of step S200 in the method for manufacturing a stacked-type electrode assembly shown in FIG. 20.

List of reference numerals: 1000-vehicle; 100-battery; 10-box; 11-first box body; 12-second box body; 20-battery cell; 21-shell; 211-housing; 2111-opening; 212-end cap; 22-stacked-type electrode assembly; 221-first electrode plate; 2211-first coated region; 2212-first blank region; 2212a-first connecting portion; 2212b-first tab portion; 2212c-first convergence region; 2212d-first bevel face; 2212e-second bevel face; 222-second electrode plate; 2221-second coated region; 2222-second blank region; 2222a-second connecting portion; 2222b-second tab portion; 2222c-second convergence region; 2222d-third bevel face; 2222e-fourth bevel face; 223-separation piece; 23-positive electrode terminal; 24-negative electrode terminal; 25-pressure relief mechanism; 26-first insulation piece; 261-first accommodation cavity; 262-first through-hole; 263-first accommodation groove; 264-first clearance; 265-first insulator; 2651-first docking hole; 2652-first docking block; 27-second insulation piece; 271-second accommodation groove; 272-second clearance; 273-second insulator; 2731-second docking hole; 2732-second docking block; 274-second accommodation cavity; 275-second through-hole; 200-controller; 300-motor; X-first direction; Y-second direction; Z-third direction.

### DETAILED DESCRIPTION OF EMBODIMENTS

To make the objectives, technical solutions, and advantages of the embodiments of this application clearer, the following gives a clear description of the technical solutions in some embodiments of this application with reference to the drawings in some embodiments of this application. Evidently, the described embodiments are merely a part rather than all of the embodiments of this application. All other embodiments derived by a person of ordinary skill in the art based on the embodiments of this application without making any creative efforts still fall within the protection scope of this application.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments.

In the description of this application, unless otherwise expressly specified and defined, the terms "mount", "concatenate", "connect", and "attach" are understood in a broad sense. For example, a "connection" may be a fixed connection, a detachable connection, or an integrated connection; or may be a direct connection or an indirect connection implemented through an intermediary; or may be internal communication between two components. A person of ordinary skill in the art is able to understand the specific meanings of the terms in this application according to specific situations.

The term "and/or" in this application indicates merely a relation for describing the related items, and represents three possible relationships. For example, "A and/or B" may represent the following three circumstances: A alone, both A and B, and B alone. In addition, the character "/" herein generally indicates an "or" relationship between the item preceding the character and the item following the character.

In some embodiments of this application, the same reference numeral denotes the same component. For brevity, detailed descriptions of the same component are omitted in a different embodiment. Understandably, dimensions such as thickness, length, and width of various components in some embodiments of this application shown in the drawings, and dimensions such as overall thickness, length, and width of an integrated device are merely illustrative descriptions, but do not constitute any limitation on this application.

"A plurality of" referred to in this application means two or more (including two).

In this application, a battery cell may include a lithium-ion secondary battery, a lithium-ion primary battery, a lithium-sulfur battery, a sodium-lithium-ion battery, a sodium-ion battery, a magnesium-ion battery, or the like, without being limited in embodiments of this application. The battery cell may be in various shapes such as cylindrical, flat, cuboidal or other shapes. The shape of the battery cell is not limited herein. In terms of the packaging form, the battery cell is typically classed into three types: cylindrical battery cell, prismatic battery cell, and pouch-type battery cell. The type of the battery cell is not limited herein.

The battery mentioned in embodiments of this application means a unitary physical module that includes one or more battery cells to provide a higher voltage and a higher capacity. For example, the battery mentioned in this application may include a battery module, a battery pack, or the like. A battery typically includes a box configured to package one or more battery cells or a plurality of battery modules. The box prevents liquid or other foreign matters from affecting the charging or discharging of the battery cells.

A battery cell includes a housing, an electrode assembly, and an electrolyte solution. The housing is configured to accommodate the electrode assembly and the electrolyte solution. The electrode assembly includes a positive electrode plate, a negative electrode plate, and a separation piece. The battery cell works primarily by shuttling metal ions between the positive electrode plate and the negative electrode plate. The positive electrode plate includes a positive current collector and a positive active material layer. The positive active material layer is applied onto a surface of the positive current collector to form a coated region of the positive electrode plate. A part, uncoated with the positive active material layer, of the positive current collector forms a blank region of the positive electrode plate. The blank region of the positive electrode plate is cut to serve as a positive tab, so that the electrical energy of the positive electrode plate is input or output through the positive tab. Using a lithium-ion battery as an example, the positive current collector may be made of aluminum, and a positive active material may be lithium cobalt oxide, lithium iron phosphate, ternary lithium, lithium manganese oxide, or the like. The negative electrode plate includes a negative current collector and a negative active material layer. The negative active material layer is applied onto a surface of the negative current collector to form a coated region of the negative electrode plate. A part, uncoated with the negative active material layer, of the negative current collector forms a blank region of the negative electrode plate. The blank region of the negative electrode plate is cut to serve as a negative tab, so that the electrical energy of the negative electrode plate is input or output through the negative tab. The negative current collector may be made of copper, and a negative active material may be carbon, silicon, or the like. To prevent a large electrical current from tripping the circuit, a plurality of positive tabs are stacked together, and a plurality of negative tabs are stacked together.

In recent years, new energy vehicles have developed by leaps and bounds. In the field of electric vehicles, power batteries play an essential and irreplaceable role as a power source of electric vehicles. A battery includes a box and a plurality of battery cells accommodated in the box. A battery cell is prepared by winding, stacking, or otherwise assembling a positive electrode plate, a negative electrode plate, and a separator to form an electrode assembly (bare cell), putting the electrode assembly into a housing, capping off an end cap, and finally injecting an electrolyte solution. However, with the continuous development of battery technology, higher requirements are also being placed on the cycle life, safety, and other performance metrics of the battery in use. Therefore, the safety performance of a battery cell determines the safety of the battery in use.

The inventor hereof finds that, for a typical battery cell, the positive electrode plate, negative electrode plate, and separator of a stacked-type electrode assembly are usually stacked in sequence. The size of the separator is larger than the positive electrode plate and the negative electrode plate, so that the separator can completely cover the positive electrode plate and the negative electrode plate. However, in the stacked-type electrode assembly of this structure, a positive tab and a negative tab need to be cut out from the positive electrode plate and the negative electrode plate respectively by using a die before the electrode plate is stacked with the separator. In other words, the current collector uncoated with the active material layer in an individual electrode plate usually needs to be cut first to form a tab sheet on one side of the coated region of the electrode plate, where the width of the tab sheet is less than the width of the electrode plate. Subsequently, a plurality of electrode plates are stacked up, and the tab sheets of the plurality of electrode plates are stacked up along the thickness direction of the electrode plate to form a tab configured to input or output electrical energy. However, in such a structure of stacked-type electrode assembly, the structural strength of the tabs is relatively weak, so that the tabs are very prone to break during assembling or subsequent use and are not conducive to improving the service life of the battery cell. In addition, the flow area of the tabs of such a structure is relatively small, thereby resulting in inferior current-carrying performance of the stacked-type electrode assembly. Consequently, the battery cell is extremely prone to a local temperature rise caused by an insufficient flow capacity, thereby posing considerable safety hazards during subsequent use of the battery cell.

Based on the above considerations, in order to solve the considerable safety hazards and the problem of a relatively short lifespan of the battery cell during subsequent use, the inventor hereof has designed a stacked-type electrode assembly after in-depth research. The stacked-type electrode assembly includes a first electrode plate and a second electrode plate of opposite polarities. The first electrode plate and the second electrode plate are stacked along a first direction. The first electrode plate includes a first coated region and a first blank region arranged along a second direction. The first blank region includes a first connecting portion and a first tab portion. The first connecting portion connects the first coated region and the first tab portion. A dimension of the first connecting portion is larger than a dimension of the first tab portion along a third direction. The first direction, the second direction, and the third direction are perpendicular to each other. The first connecting portions of a plurality of first electrode plates converge at one end of the stacked-type electrode assembly in the second direction to form a first convergence region. The first tab portions of the plurality of first electrode plates are stacked and protrude beyond the first convergence region along the second direction.

In the above stacked-type electrode assembly, the first connecting portions of a plurality of first electrode plates converge at one end of the stacked-type electrode assembly in the second direction, so that the first convergence region formed by the plurality of first connecting portions can cover one end of the stacked-type electrode assembly. The first tab portions of a plurality of first electrode plates are stacked and then protrude beyond the first convergence region, so that the first tab portions can input or output the electrical energy of the stacked-type electrode assembly through the first convergence region. Such a structure of the stacked-type electrode assembly can, on the one hand, effectively improve the current-carrying performance of the first blank region of the first electrode plate, so as to ensure stability of the current flow, and in turn, favorably improve the working performance of the stacked-type electrode assembly and alleviate the phenomenon of a local temperature rise caused by a deficient flow area of the stacked-type electrode assembly. On the other hand, such a structure can effectively improve the toughness and structural stability of the first tab portion, so as to reduce the risk of breakage of the first tab portion during production or use, and in turn, increase the service life of the stacked-type electrode assembly.

In addition, in the stacked-type electrode assembly of this structure, a first convergence region and a first tab portion protruding beyond the first convergence region are formed at one end of the stacked-type electrode assembly in the first blank regions of a plurality of first electrode plates, so as to implement the input or output of electrical energy to the stacked-type electrode assembly. Therefore, in a process of producing the stacked-type electrode assembly of this structure, the first electrode plate and the second electrode plate can be stacked first, and then the first blank regions of the plurality of first electrode plates can be converged and uniformly cut to form a first connecting portion and a first tab portion. In this way, the first electrode plate does not need to be cut individually before the first electrode plate and the second electrode plate are stacked. On the one hand, this design effectively reduces the occurrences of dislocation, lap-joint, folding, or other phenomena of the first tab portions of the plurality of first electrode plates. On the other hand, this design can significantly optimize the production rhythm of the stacked-type electrode assembly, and improve the production efficiency of the stacked-type electrode assembly.

The stacked-type electrode assembly disclosed in an embodiment of this application is applicable to, but is not limited to use in, electrical devices such as a vehicle, watercraft, or aircraft. A power supply system of the electrical devices may be formed by using the battery cell, the battery, and the like disclosed herein, so as to effectively reduce the risk of a local temperature rise in the battery cell during subsequent use, and in turn, improve the safety of the battery in use.

An embodiment of this application provides an electrical device powered by a battery. The electrical device may be, but is not limited to, a mobile phone, a tablet, a laptop computer, an electric toy, an electric tool, an electric power cart, an electric vehicle, a ship, a spacecraft, or the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like.

For ease of description in the following embodiments, a vehicle 1000 is used as an example of the electrical device according to an embodiment of this application.

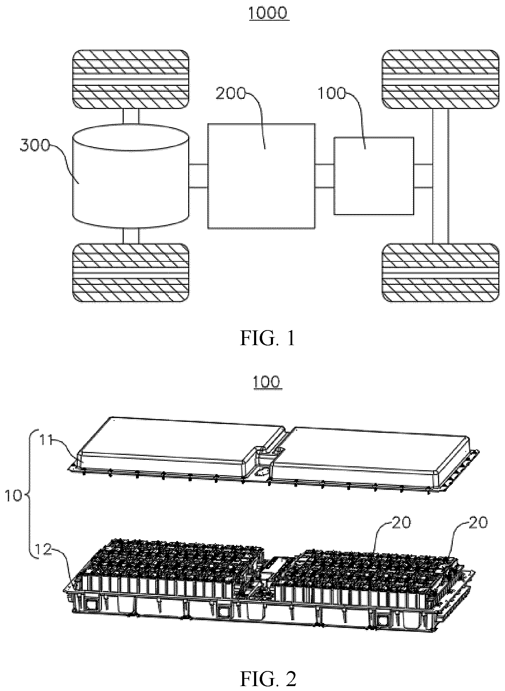

Referring to FIG. 1, FIG. 1 is a schematic structural diagram of a vehicle 1000 according to some embodiments of this application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a driving power supply of the vehicle 1000 to provide driving power for the vehicle 1000 in place of or partly in place of fuel oil or natural gas.

Referring to FIG. 2, FIG. 2 is an exploded view of a battery 100 according to some embodiments of this application. The battery 100 includes a box 10 and a battery cell 20. The battery cell 20 is accommodated in the box 10. The box 10 is configured to provide an assembling space for the battery cell 20. The box 10 may assume various structures. In some embodiments, the box 10 may include a first box body 11 and a second box body 12. The first box body 11 and the second box body 12 fit each other. The first box body 11 and the second box body 12 together define an assembling space configured to accommodate the battery cell 20. The second box body 12 may be a hollow structure opened at one end. The first box body 11 may be a plate-like structure. The first box body 11 fits on an opening of the second box body 12 so that the first box body 11 and the second box body 12 together define the assembling space. Alternatively, both the first box body 11 and the second box body 12 may be hollow structures opened on one side. The opening of the first box body 11 fits the opening of the second box body 12. Definitely, the box 10 formed by the first box body 11 and the second box body 12 may be in various shapes such as a cylinder or a cuboid.

The battery 100 may contain a plurality of battery cells 20. The plurality of battery cells 20 may be connected in series, parallel, or series-and-parallel pattern. The series-and-parallel pattern means a combination of series connection and parallel connection of the plurality of battery cells 20. The plurality of battery cells 20 may be directly connected in series, parallel, or series-and-parallel pattern, and then the whole of the plurality of battery cells 20 may be accommodated in the box 10. Alternatively, to make up a battery 100, the plurality of battery cells 20 may be connected in series, parallel, or series-and-parallel pattern to form a battery module first, and then a plurality of battery modules are connected in series, parallel, or series-and-parallel pattern to form a whole and accommodated in the box 10. The battery 100 may further include other structures. For example, the battery 100 may further include a busbar component. The busbar component is configured to implement electrical connection between the plurality of battery cells 20.

Each battery cell 20 may be, but is not limited to, a secondary battery or primary battery; or, may be a lithium-sulfur battery, a sodium-ion battery, or a magnesium-ion battery. The battery cell 20 may be in a shape such as a cylinder, a flat body, a cuboid, or other shapes.

It is hereby noted that, in some embodiments, no box 10 is disposed for the battery 100, but a plurality of battery cells 20 are directly integrated into the vehicle 1000. The plurality of battery cells 20 are configured to provide electrical energy for the vehicle 1000.

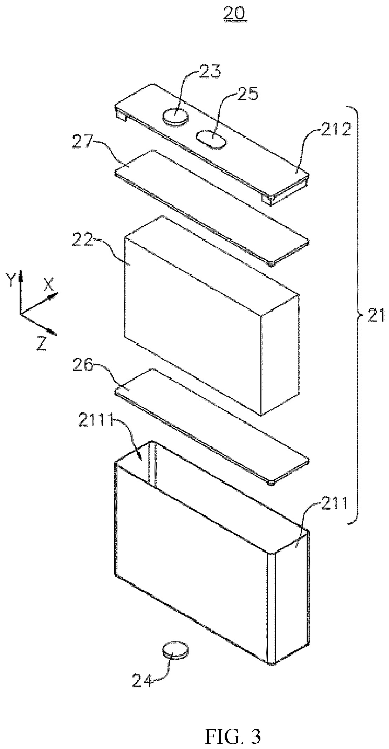

Referring to FIG. 3, FIG. 3 is an exploded view of a battery cell 20 according to some embodiments of this application. A battery cell 20 includes a shell 21 and a stacked-type electrode assembly 22. The shell 21 is configured to accommodate the stacked-type electrode assembly 22.

The shell 21 may be further configured to accommodate an electrolyte such as an electrolyte solution. The shell 21 may assume various structural forms.

In some embodiments, the shell 21 may include a housing 211 and an end cap 212. The housing 211 is a hollow structure with an opening 2111 created on one side. The end cap 212 fits on, and is hermetically connected to, the opening 2111 of the housing 211, to form a sealed space configured to accommodate the stacked-type electrode assembly 22 and the electrolyte.

During assembling of the battery cell 20, the stacked-type electrode assembly 22 may be put into the housing 211 first. The housing 211 is filled with an electrolyte, and then the end cap 212 caps off the opening 2111 of the housing 211.

The housing 211 may be in various shapes such as a cylinder or cuboid. The shape of the housing 211 may be determined depending on the specific shape of the stacked-type electrode assembly 22. For example, if the stacked-type electrode assembly 22 is a cylindrical structure, the housing may be a cylindrical housing. If the stacked-type electrode assembly 22 is a cuboidal structure, the housing may be a cuboidal housing. Definitely, the end cap 212 may assume one of various structures. For example, the end cap 212 is a plate-like structure, a hollow structure with an opening 2111 created at one end, or the like. For example, in FIG. 3, the housing 211 is a cuboidal structure, the end cap 212 is a plate-like structure, and the end cap 212 caps off the opening 2111 of the housing 211.

In some embodiments, the battery cell 20 may further include a positive electrode terminal 23, a negative electrode terminal 24, and a pressure relief mechanism 25. The positive electrode terminal 23 and the pressure relief mechanism are both mounted on the end cap 212. The negative electrode terminal 24 is mounted at one end of the housing 211, the end being opposite to the end cap 212. Both the positive electrode terminal 23 and the negative electrode terminal 24 are configured to be electrically connect to the stacked-type electrode assembly 22, so as to implement input and output of electrical energy of the battery cell 20. The pressure relief mechanism 25 is configured to release pressure inside the battery cell 20 when an internal pressure or temperature of the battery cell 20 reaches a preset value.

As an example, the pressure relief mechanism 25 may be a component such as an explosion-proof valve, a rupture disk, a gas valve, a pressure relief valve, or a safety valve.

Understandably, the shell 21 is not limited to the structures enumerated above. The shell 21 may be another structure instead. For example, the shell 21 includes a housing 211 and two end caps 212. The housing 211 is a hollow structure with openings 2111 created on two opposite sides. One end cap 212 fits on, and is hermetically connected to, one corresponding opening 2111 of the housing 211, to form a sealed space configured to accommodate the stacked-type electrode assembly 22 and the electrolyte. The positive electrode terminal 23 and the negative electrode terminal 24 are mounted on the corresponding end caps 212 respectively. In such a structure, the pressure relief mechanism 25 may be mounted on one end cap 212, or the pressure relief mechanism 25 may be mounted on both end caps 212.

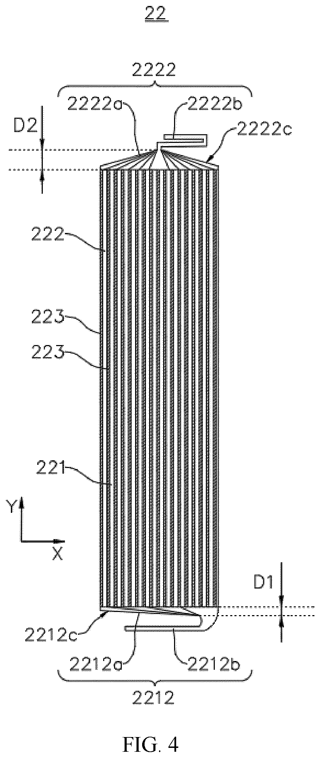

It is hereby noted that, in this embodiment of this application, one or more stacked-type electrode assemblies 22 may be accommodated in the shell 21. As an example, in FIG. 3, one stacked-type electrode assembly 22 is disposed. The stacked-type electrode assembly 22 is a component in which electrochemical reactions occur in the battery cell 20. Referring to FIG. 4, FIG. 4 is a cross-sectional view of a stacked-type electrode assembly 22 according to some embodiments of this application. The stacked-type electrode assembly 22 may include a first electrode plate 221 and a second electrode plate 222 of opposite polarities. The first electrode plate 221 and the second electrode plate 222 are stacked along a first direction X to form a stacked-type electrode assembly 22 that assumes a stacked structure.

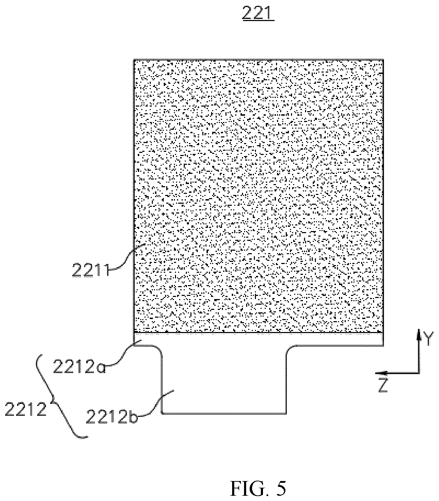

According to some embodiments of this application, referring to FIG. 3 and FIG. 4 together with FIG. 5, FIG. 5 is a schematic structural diagram of a first electrode plate 221 according to some embodiments of this application. This application provides a stacked-type electrode assembly 22. The stacked-type electrode assembly 22 includes a first electrode plate 221 and a second electrode plate 222 of opposite polarities. The first electrode plate 221 and the second electrode plate 222 are stacked along the first direction X. The first electrode plate 221 includes a first coated region 2211 and a first blank region 2212 arranged along a second direction Y. The first blank region 2212 includes a first connecting portion 2212a and a first tab portion 2212b. The first connecting portion 2212a connects the first coated region 2211 and the first tab portion 2212b. A dimension of the first connecting portion 2212a is larger than a dimension of the first tab portion 2212b along a third direction Z. The first direction X, the second direction Y, and the third direction Z are perpendicular to each other. The first connecting portions 2212a of a plurality of first electrode plates 221 converge at one end of the stacked-type electrode assembly 22 in the second direction Y to form a first convergence region 2212c. The first tab portions 2212b of the plurality of first electrode plates 221 are stacked and protrude beyond the first convergence region 2212c along the second direction Y.

In the above description, the first coated region 2211 and the first blank region 2212 are a current collector region coated with the active material layer, and a current collector region uncoated with the active material layer, of the first electrode plate 221, respectively. The first connecting portion 2212a connects the first coated region 2211 and the first tab portion 2212b. Along the third direction Z, the dimension of the first connecting portion 2212a is larger than the dimension of the first tab portion 2212b. In other words, the first connecting portion 2212a is connected between the first coated region 2211 and the first tab region along the second direction Y, and the width of the first connecting portion 2212a in the third direction Z is greater than that of the first tab portion 2212b.

As an example, the first coated region 2211 and the first connecting portion 2212a are of the same width in the third direction Z. The first electrode plate 221 that assumes this structure can effectively increase the structural strength of the first connecting portion 2212a on the one hand, and is easy to process and manufacture on the other hand. The first connecting portion 2212a may be formed by the current collector region uncoated with the active material layer on the first electrode plate 221. In this way, in a process of processing and manufacturing the first electrode plate 221, it is not necessary to perform other processing processes on the first connecting portion 2212a, thereby effectively reducing the manufacturing difficulty of the first electrode plate 221, and improving the production efficiency of the first electrode plate 221.

It is hereby noted that, in this embodiment, the first electrode plate 221 may be a positive electrode plate or a negative electrode plate, without being limited herein.

The first electrode plate 221 includes a first coated region 2211 and a first blank region 2212 arranged along the second direction Y. A first connecting portion 2212a and a first tab portion 2212b connected to each other are formed in the first blank region 2212. The first connecting portions 2212a of a plurality of first electrode plates 221 converge at one end of the stacked-type electrode assembly 22 in the second direction Y, so that the first convergence region 2212c formed by the plurality of first connecting portions 2212a can cover one end of the stacked-type electrode assembly 22. The first tab portions 2212b of a plurality of first electrode plates 221 are stacked and then protrude beyond the first convergence region 2212c, so that the first tab portions 2212b can input or output the electrical energy of the stacked-type electrode assembly 22 through the first convergence region 2212c. Such a structure of the stacked-type electrode assembly 22 can, on the one hand, effectively improve the current-carrying performance of the first blank region 2212 of the first electrode plate 221, so as to ensure stability of the current flow, and in turn, favorably improve the working performance of the stacked-type electrode assembly 22 and alleviate the phenomenon of a local temperature rise caused by a deficient flow area of the stacked-type electrode assembly 22. On the other hand, such a structure can effectively improve the toughness and structural stability of the first tab portion 2212b, so as to reduce the risk of breakage of the first tab portion 2212b during production or use, and in turn, increase the service life of the stacked-type electrode assembly 22.

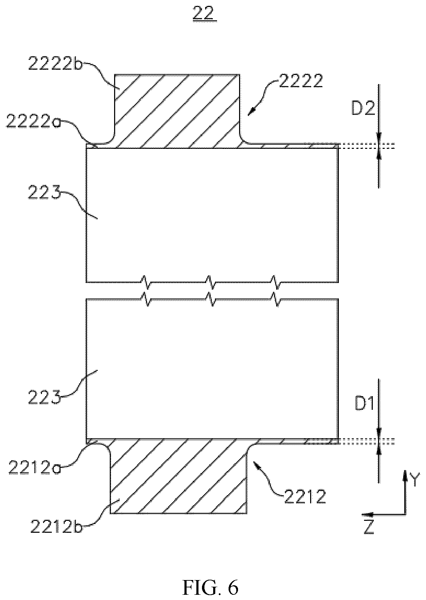

According to some embodiments of this application, referring to FIG. 4 and FIG. 5 together with FIG. 6, FIG. 6 is a schematic structural diagram of a stacked-type electrode assembly 22 according to some embodiments of this application. The stacked-type electrode assembly 22 further includes a separation piece 223. The separation piece 223 is disposed between the first electrode plate 221 and the second electrode plate 222, and is configured to separate the first electrode plate 221 from the second electrode plate 222. The separation piece 223 covers the first coated region 2211 along the first direction X. The first connecting portion 2212a protrudes beyond the separation piece 223 along the second direction Y.

The separation piece 223 is a separator. The separator is disposed between the first electrode plate 221 and the second electrode plate 222 to isolate the first electrode plate 221 from the second electrode plate 222.

As an example, the separation piece 223 may be made of a material such as PP (polypropylene, polypropylene) or PE (polyethylene, polyethylene).

The first connecting portion 2212a protrudes beyond the separation piece 223 along the second direction Y. In other words, the first blank region 2212 of the first electrode plate 221 extends out of one end of the separation piece 223 along the second direction Y. On the one hand, this structure of the stacked-type electrode assembly 22 makes it convenient for the first connecting portions 2212a of a plurality of first electrode plates 221 to converge at one end of the stacked-type electrode assembly 22 in the second direction Y, and facilitates manufacturing and production. On the other hand, by virtue of this structure, a plurality of first electrode plates 221 can be stacked first and then cut uniformly to form a first convergence region 2212c and a plurality of stacked first tab portions 2212b, thereby improving the production efficiency of the stacked-type electrode assembly 22.

According to some embodiments of this application, referring to FIG. 4 and FIG. 6, a thickness of the first convergence region 2212c in the second direction Y is 2 mm to 4 mm.

That the thickness of the first convergence region 2212c in the second direction Y is 2 mm to 4 mm means that the dimension by which the converged first connecting portions 2212a of the plurality of first electrode plates 221 protrude beyond one end of the separation piece 223 in the second direction Y is 2 mm to 4 mm. As can be seen from FIG. 4 and FIG. 6, the thickness of the first convergence region 2212c in the second direction Y is D1, satisfying: 2 mm ≤ D1 ≤ 4 mm.

The thickness of the first convergence region 2212c is set between 2 mm and 4 mm. On the one hand, this setting can effectively alleviate the risk of low structural strength and insufficient flow area between the first convergence region 2212c and the first tab portion 2212b caused by a deficient thickness of the first convergence region 2212c. On the other hand, this setting can effectively alleviate the phenomenon of an excessive footprint of the stacked-type electrode assembly 22 caused by an excessive thickness of the first convergence region 2212c, thereby increasing the energy density of the stacked-type electrode assembly 22.

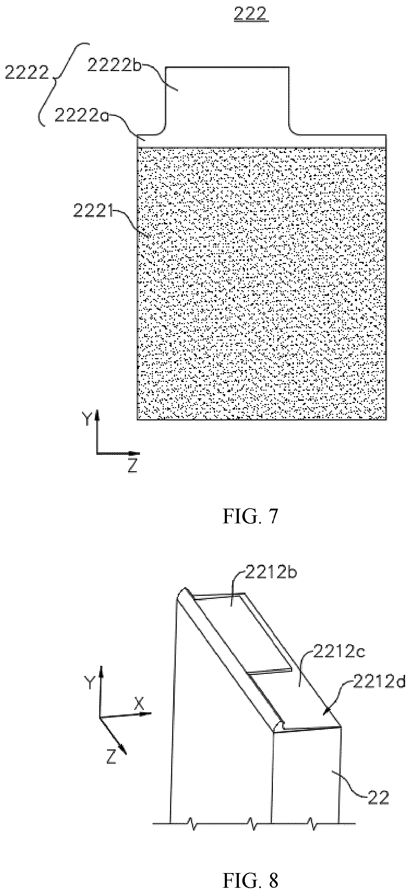

According to some embodiments of this application, referring to FIG. 4 and FIG. 6 together with FIG. 7, FIG. 7 is a schematic structural diagram of a second electrode plate 222 according to some embodiments of this application. The second electrode plate 222 includes a second coated region 2221 and a second blank region 2222 arranged along the second direction Y. The second blank region 2222 includes a second connecting portion 2222a and a second tab portion 2222b. The second connecting portion 2222a connects the second coated region 2221 and the second tab portion 2222b. The dimension of the second connecting portion 2222a is larger than the dimension of the second tab portion 2222b along the third direction Z. The second connecting portions 2222a of a plurality of second electrode plates 222 converge at one end of the stacked-type electrode assembly 22 in the second direction Y to form a second convergence region 2222c, where the end is oriented away from the first convergence region 2212c. The second tab portions 2222b of the plurality of second electrode plates 222 are stacked and protrude as a whole beyond the second convergence region 2222c along the second direction Y.

In the above description, the second coated region 2221 and the second blank region 2222 are a current collector region coated with the active material layer, and a current collector region uncoated with the active material layer, of the second electrode plate 222, respectively. The second connecting portion 2222a connects the second coated region 2221 and the second tab portion 2222b. Along the third direction Z, the dimension of the second connecting portion 2222a is larger than the dimension of the second tab portion 2222b. In other words, the second connecting portion 2222a is connected between the second coated region 2221 and the second tab region along the second direction Y, and the width of the second connecting portion 2222a in the third direction Z is greater than that of the second tab portion 2222b.

The second coated region 2221 and the second connecting portion 2222a are of the same width in the third direction Z.

As an example, in FIG. 4, the first electrode plate 221 is a negative electrode plate and the second electrode plate 222 is a positive electrode plate. Definitely, in some other embodiments, the first electrode plate 221 may be a positive electrode plate and the second electrode plate 222 may be a negative electrode plate.

Optionally, the second convergence region 2222c protrudes beyond one end of the separation piece 223 by 2 mm to 4 mm along the second direction Y. As can be seen from FIG. 4 and FIG. 6, the thickness of the second convergence region 2222c in the second direction Y is D2, satisfying: 2 mm ≤ D2 ≤ 4 mm.

The second connecting portions 2222a of a plurality of second electrode plates 222 are set to converge at one end of the stacked-type electrode assembly 22 in the second direction Y, where the end is oriented away from the first convergence region 2212c. In this way, the second convergence region 2222c formed by the plurality of second connecting portions 2222a covers one end of the stacked-type electrode assembly 22. The second tab portions 2222b of a plurality of second electrode plates 222 are stacked and then protrude beyond the second convergence region 2222c. The stacked-type electrode assembly 22 that assumes this structure can effectively improve the current-carrying performance of the second blank region 2222 of the second electrode plate 222, so as to ensure stability of the current flow. In addition, such a structure can favorably improve the toughness and structural stability of the second tab portion 2222b, so as to reduce the risk of breakage of the second tab portion 2222b during production or use, and in turn, further increase the overall structural stability and working performance of the stacked-type electrode assembly 22.

It is hereby noted that, in FIG. 4, the first convergence region 2212c and the second convergence region 2222c are located at the two ends of the stacked-type electrode assembly 22 in the second direction Y, respectively. Definitely, the structure of the stacked-type electrode assembly 22 is not limited to the example above. In other embodiments, the second convergence region 2222c may be formed at one end adjacent to the first convergence region 2212c. For example, the second electrode plate 222 includes a second coated region 2221 and a second blank region 2222 arranged along the third direction Z. The second blank region 2222 includes a second connecting portion 2222a and a second tab portion 2222b. The second connecting portion 2222a connects the second coated region 2221 and the second tab portion 2222b. The dimension of the second connecting portion 2222a is larger than the dimension of the second tab portion 2222b along the second direction Y. The second connecting portions 2222a of a plurality of second electrode plates 222 converge at one end of the stacked-type electrode assembly 22 in the third direction Z to form a second convergence region 2222c. The second tab portions 2222b of the plurality of second electrode plates 222 are stacked and protrude as a whole beyond the second convergence region 2222c along the third direction Z.

The second coated region 2221 and the second blank region 2222 of the second electrode plate 222 are arranged along the third direction Z. In this way, the second convergence region 2222c is located at one end of the stacked-type electrode assembly 22 in the third direction Z, so that the second convergence region 2222c and a plurality of stacked second tab portions 2222b can be arranged adjacent to the first convergence region 2212c, thereby facilitating diversification of the structure of the stacked-type electrode assembly 22 to meet different usage scenarios.

According to some embodiments of this application, this application further provides a battery cell 20. The battery cell includes a shell 21 and the stacked-type electrode assembly 22 disclosed in any one of the above technical solutions. The stacked-type electrode assembly 22 is accommodated in the shell 21.

According to some embodiments of this application, referring to FIG. 3 and FIG. 4, the battery cell 20 further includes a first insulation piece 26. The first insulation piece 26 covers the first convergence region 2212c. The first insulation piece 26 is configured to insulate the first tab portion 2212b from the shell 21.

The first insulation piece 26 covers the first convergence region 2212c, and provides a space available for the stacked first tab portions 2212b to pass through, so that the first tab portions 2212b can be connected to the positive electrode terminal 23 or the negative electrode terminal 24 of the battery cell 20.

As an example, the first insulation piece 26 may be made of rubber, plastic, silicone, or another material.

The first insulation piece 26 is disposed at one end of the stacked-type electrode assembly 22 so that the first insulation piece 26 can cover the first convergence region 2212c. In this way, the first insulation piece 26 can dielectrically isolate the first tab portion 2212b from the shell 21 on the one hand, so as to reduce the phenomena of a lap-joint or short circuit between the first tab portion 2212b and the shell 21. On the other hand, this arrangement can isolate the first convergence region 2212c from the shell 21, thereby improving the safety of the battery cell 20 in use.

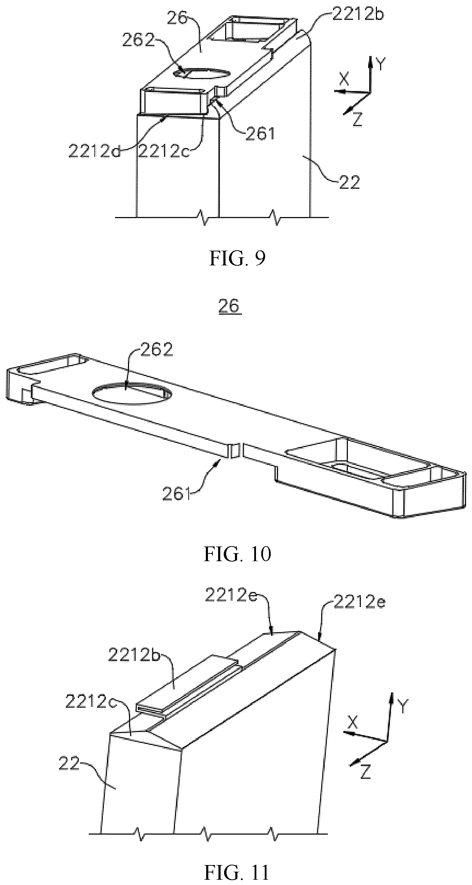

According to some embodiments of this application, referring to FIG. 4 together with FIG. 8, FIG. 9, and FIG. 10, FIG. 8 is a schematic structural diagram of a first convergence region 2212c of a stacked-type electrode assembly 22 according to some embodiments of this application; FIG. 9 is a schematic diagram of connection between a first convergence region 2212c and a first insulation piece 26 according to some embodiments of this application; and FIG. 10 is a schematic structural diagram of a first insulation piece 26 according to some embodiments of this application. Along the first direction X, the first connecting portions 2212a of a plurality of first electrode plates 221 converge from one side toward an opposite side of the stacked-type electrode assembly 22 to form a first bevel face 2212d in the first convergence region 2212c. The first insulation piece 26 covers the first bevel face 2212d.

In the above description, along the first direction X, the first connecting portions 2212a of a plurality of first electrode plates 221 converge from one side to the opposite side of the stacked-type electrode assembly 22. In other words, the first connecting portions 2212a of the plurality of first electrode plates 221 are inclined from one side toward the opposite side of the stacked-type electrode assembly 22 along the first direction X, so as to form a first convergence region 2212c with a first bevel face 2212d, and position the first connecting portion 2212a on one side of the first convergence region 2212c in the first direction X.

The lower surface of the first insulation piece 26 in the second direction Y mates with the first bevel face 2212d, so that the first insulation piece 26 can cover the first bevel face 2212d.

Optionally, a first accommodation cavity 261 is formed inside the first insulation piece 26. The first accommodation cavity 261 runs through one side of the first insulation piece 26 along the first direction X, the side being close to the first tab portion 2212b. In this way, the first tab portion 2212b can penetrate and fit into the first accommodation cavity 261. A first through-hole 262 is further created on one side of the first insulation piece 26 in the second direction Y, the side being oriented away from the first bevel face 2212d. The first through-hole is available for the positive electrode terminal 23 or the negative electrode terminal 24 to pass through. The first through-hole 262 communicates with the first accommodation cavity 261, so that the first tab portion 2212b can be connected to the positive electrode terminal 23 or the negative electrode terminal 24 to input or output the electrical energy of the stacked-type electrode assembly 22.

The first connecting portions 2212a of a plurality of first electrode plates 221 converge toward one side of the stacked-type electrode assembly 22 along the first direction X, so as to converge the plurality of first connecting portions 2212a at one end of the stacked-type electrode assembly 22 to form a first convergence region 2212c. In addition, a matching first insulation piece 26 covers the first bevel face 2212d of the first convergence region 2212c correspondingly to implement dielectrical isolation between the first tab portion 2212b and the shell 21 and between the first convergence region 2212c and the shell 21. Such a structure of the battery cell 20 can reduce the manufacturing difficulty of the first insulation piece 26, reduce the manufacturing cost, and improve the production efficiency.

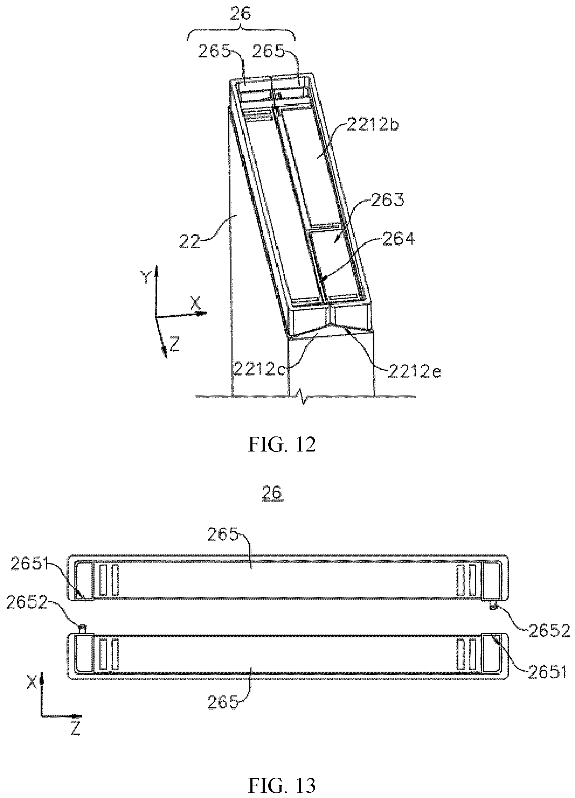

According to some embodiments of this application, referring to FIG. 11 and FIG. 12, FIG. 11 is a schematic structural diagram of a first convergence region 2212c of a stacked-type electrode assembly 22 according to some other embodiments of this application; and FIG. 12 is a schematic diagram of connection between a first convergence region 2212c and a first insulation piece 26 according to some other embodiments of this application. Along the first direction X, the first connecting portions 2212a of a plurality of first electrode plates 221 converge from both sides toward the middle of the stacked-type electrode assembly 22 to form two second bevel faces 2212e in the first convergence region 2212c. The first insulation piece 26 covers the two second bevel faces 2212e.

In the above description, along the first direction X, the first connecting portions 2212a of a plurality of first electrode plates 221 converge from both sides toward the middle of the stacked-type electrode assembly 22. In other words, the first connecting portions 2212a of the plurality of first electrode plates 221 are inclined from both sides toward the middle of the stacked-type electrode assembly 22 along the first direction X, so as to form a first convergence region 2212c with two second bevel faces 2212e, and position the first connecting portion 2212a in the middle of the first convergence region 2212c in the first direction X.

The lower surface of the first insulation piece 26 in the second direction Y mates with the two second bevel faces 2212e, so that the first insulation piece 26 can cover the two second bevel faces 2212e.

Optionally, a first accommodation groove 263 is created on one side of the first insulation piece 26 in the second direction Y, the side being oriented away from the second bevel faces 2212e. A first clearance 264 that runs through the lower surface of the first insulation piece 26 is created on the bottom wall of the first accommodation groove 263. In this way, the first tab portion 2212b can penetrate and fit into the first accommodation groove 263 through the first clearance 264, so that the first tab portion 2212b can be connected to the positive electrode terminal 23 or the negative electrode terminal 24 to input or output the electrical energy of the stacked-type electrode assembly 22.

The first connecting portions 2212a of a plurality of first electrode plates 221 converge toward the middle of the stacked-type electrode assembly 22 along the first direction X, so as to converge the plurality of first connecting portions 2212a at one end of the stacked-type electrode assembly 22 to form a first convergence region 2212c. In addition, a matching first insulation piece 26 covers the two second bevel faces 2212e of the first convergence region 2212c correspondingly to implement dielectrical isolation between the first tab portion 2212b and the shell 21 and between the first convergence region 2212c and the shell 21. Such a structure of the battery cell 20 can reduce the manufacturing difficulty of the first convergence region 2212c, and facilitate electrical connection between the first tab portion 2212b and the electrode terminal on the shell 21.

According to some embodiments of this application, referring to FIG. 13, FIG. 13 is an exploded view of a first insulation piece 26 according to some other embodiments of this application. The first insulation piece 26 includes two first insulators 265. The two first insulators 265 cover the two second bevel faces 2212e respectively. The two first insulators 265 are arranged opposite to each other along the first direction X and are spliced with each other. A first clearance 264 is formed between the two first insulators 265 and is available for the first tab portion 2212b to pass through.

As an example, the two first insulators 265 are arranged opposite to each other along the first direction X. A first docking hole 2651 and a first docking block 2652 are created on one side of the first insulator 265 in the first direction X. The first docking hole 2651 and the first docking block 2652 are arranged at intervals along the third direction Z. The first docking block 2652 of one first insulator 265 is configured to be inserted into the first docking hole 2651 of another first insulator 265 to splice the two first insulators 265. Definitely, in other embodiments, the two first insulators 265 may be detachably connected by a bolt or other means instead.

The first insulation piece 26 includes two first insulators 265. Each first insulator 265 can cover the corresponding second bevel face 2212e, so that the first insulation piece 26 can cover the two second bevel faces 2212e. The structure is simple and easy to implement. In addition, the two first insulators 265 are spliced together along the first direction X, and a first clearance 264 is formed between the two first insulators 265 and is available for the first tab portion 2212b to pass through. Such a structure of the first insulation piece 26 is easy to manufacture and assemble, and facilitates subsequent maintenance and replacement.

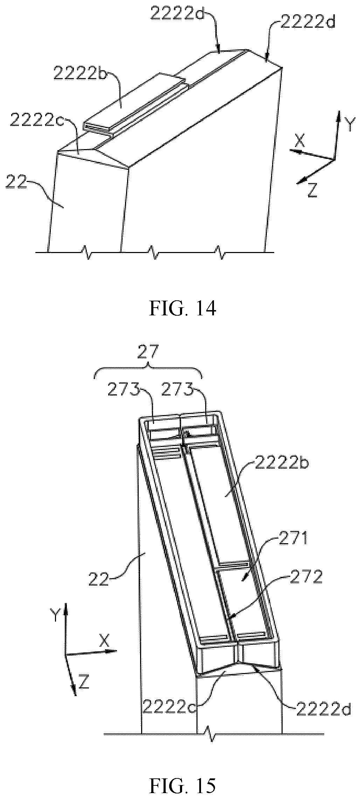

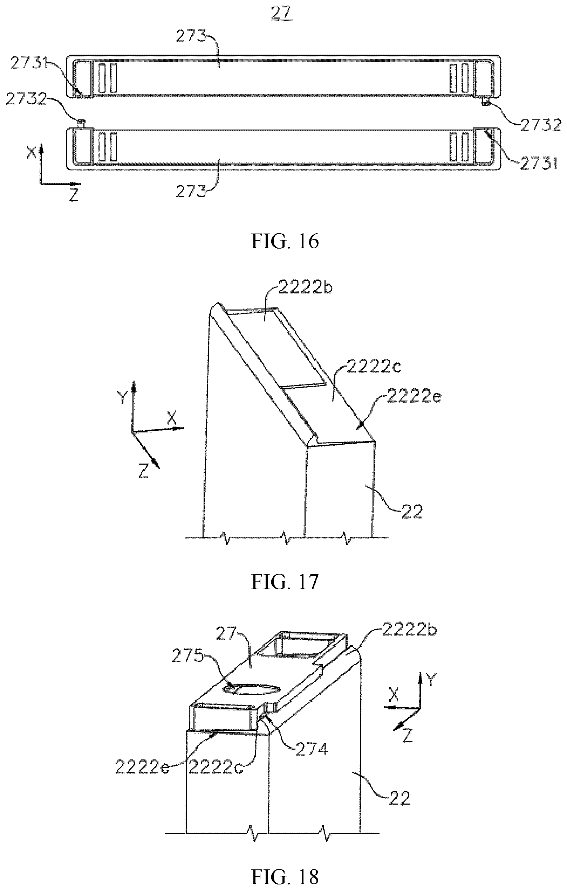

According to some embodiments of this application, in an embodiment in which a second convergence region 2222c is also formed on the second electrode plate 222 at one end of the stacked-type electrode assembly 22, referring to FIG. 3 and FIG. 4 together with FIG. 14, FIG. 15, and FIG. 16, FIG. 14 is a schematic structural diagram of a second convergence region 2222c of a stacked-type electrode assembly 22 according to some embodiments of this application; FIG. 15 is a schematic diagram of connection between a second convergence region 2222c and a second insulation piece 27 according to some embodiments of this application; and FIG. 16 is an exploded view of a second insulation piece 27 according to some embodiments of this application. The battery cell 20 may further include a second insulation piece 27. The second insulation piece 27 covers the second convergence region 2222c. The second insulation piece 27 is configured to insulate the second tab portion 2222b from the shell 21.

In some embodiments, along the first direction X, the second connecting portions 2222a of a plurality of second electrode plates 222 converge from both sides toward the middle of the stacked-type electrode assembly 22 to form two third bevel faces 2222d in the second convergence region 2222c. The second insulation piece 27 covers the two third bevel faces 2222d.

In the above description, along the first direction X, the second connecting portions 2222a of a plurality of second electrode plates 222 converge from both sides toward the middle of the stacked-type electrode assembly 22. In other words, the second connecting portions 2222a of the plurality of second electrode plates 222 are inclined from both sides toward the middle of the stacked-type electrode assembly 22 along the first direction X, so as to form a second convergence region 2222c with two third bevel faces 2222d, and position the second connecting portion 2222a in the middle of the second convergence region 2222c in the first direction X.

The lower surface of the second insulation piece 27 in the second direction Y mates with the two third bevel faces 2222d, so that the second insulation piece 27 can cover the two third bevel faces 2222d.

Optionally, a second accommodation groove 271 is created on one side of the second insulation piece 27 in the second direction Y, the side being oriented away from the third bevel faces 2222d. A second clearance 272 that runs through the lower surface of the second insulation piece 27 is created on the bottom wall of the second accommodation groove 271. In this way, the second tab portion 2222b can penetrate and fit into the second accommodation groove 271 through the second clearance 272, so that the second tab portion 2222b can be connected to the positive electrode terminal 23 or the negative electrode terminal 24 to input or output the electrical energy of the stacked-type electrode assembly 22.

The second connecting portions 2222a of a plurality of second electrode plates 222 converge toward the middle of the stacked-type electrode assembly 22 along the first direction X, so as to converge the plurality of second connecting portions 2222a at one end of the stacked-type electrode assembly 22 to form a second convergence region 2222c. In addition, a matching second insulation piece 27 covers the two third bevel faces 2222d of the second convergence region 2222c correspondingly to implement dielectrical isolation between the second tab portion 2222b and the shell 21 and between the second convergence region 2222c and the shell 21. Such a structure of the battery cell 20 can reduce the manufacturing difficulty of the second convergence region 2222c, and facilitate electrical connection between the second tab portion 2222b and the electrode terminal on the shell 21.

According to some embodiments of this application, as shown in FIG. 16, the second insulation piece 27 includes two second insulators 273. The two second insulators 273 cover the two third bevel faces 2222d respectively. The two second insulators 273 are arranged opposite to each other along the first direction X and are spliced with each other. A second clearance 272 is formed between the two second insulators 273 and is available for the second tab portion 2222b to pass through.

As an example, the two second insulators 273 are arranged opposite to each other along the first direction X. A second docking hole 2731 and a second docking block 2732 are created on one side of the second insulator 273 in the first direction X. The second docking hole 2731 and the second docking block 2732 are arranged at intervals along the third direction Z. The second docking block 2732 of one second insulator 273 is configured to be inserted into the second docking hole 2731 of another second insulator 273 to splice the two second insulators 273. Definitely, in other embodiments, the two second insulators 273 may be detachably connected by a bolt or other means instead.

The second insulation piece 27 includes two second insulators 273. Each second insulator 273 can cover the corresponding third bevel face 2222d, so that the second insulation piece 27 can cover the two third bevel faces 2222d. The structure is simple and easy to implement. In addition, the two second insulators 273 are spliced together along the first direction X, and a second clearance 272 is formed between the two second insulators 273 and is available for the second tab portion 2222b to pass through. Such a structure of the second insulation piece 27 is easy to manufacture and assemble, and facilitates subsequent maintenance and replacement.

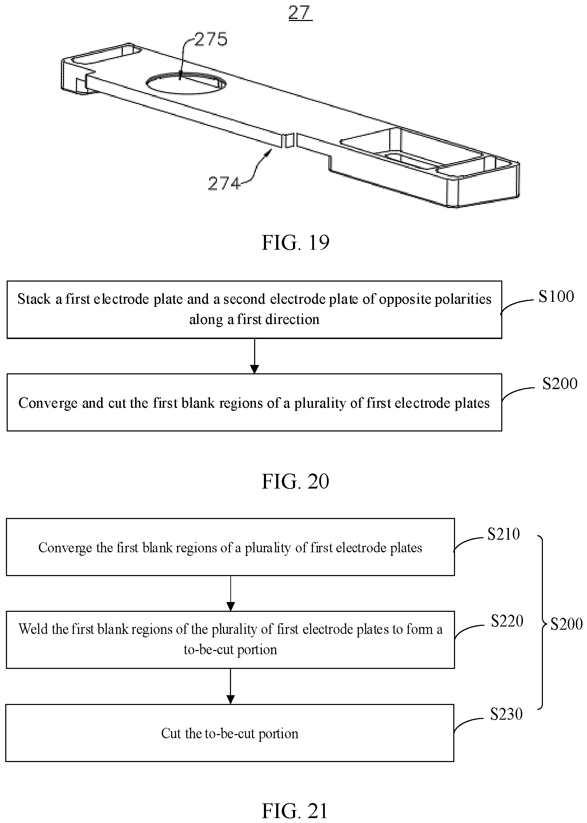

According to some embodiments of this application, referring to FIG. 17, FIG. 18, and FIG. 19, FIG. 17 is a schematic structural diagram of a second convergence region 2222c of a stacked-type electrode assembly 22 according to some other embodiments of this application; FIG. 18 is a schematic diagram of connection between a second convergence region 2222c and a second insulation piece 27 according to some other embodiments of this application; and FIG. 19 is a schematic structural diagram of a second insulation piece 27 according to some other embodiments of this application. Along the first direction X, the second connecting portions 2222a of a plurality of second electrode plates 222 converge from one side toward an opposite side of the stacked-type electrode assembly 22 to form a fourth bevel face 2222e in the second convergence region 2222c. The second insulation piece 27 covers the fourth bevel face 2222e.

In the above description, along the first direction X, the second connecting portions 2222a of a plurality of second electrode plates 222 converge from one side to the opposite side of the stacked-type electrode assembly 22. In other words, the second connecting portions 2222a of the plurality of second electrode plates 222 are inclined from one side toward the opposite side of the stacked-type electrode assembly 22 along the first direction X, so as to form a second convergence region 2222c with a fourth bevel face 2222e, and position the second connecting portion 2222a on one side of the second convergence region 2222c in the first direction X.

The lower surface of the second insulation piece 27 in the second direction Y mates with the fourth bevel face 2222e, so that the second insulation piece 27 can cover the fourth bevel face 2222e.

Optionally, a second accommodation cavity 274 is formed inside the second insulation piece 27. The second accommodation cavity 274 runs through one side of the second insulation piece 27 along the first direction X, the side being close to the second tab portion 2222b. In this way, the second tab portion 2222b can penetrate and fit into the second accommodation cavity 274. A second through-hole 275 is further created on one side of the second insulation piece 27 in the second direction Y, the side being oriented away from the fourth bevel face 2222e. The second through-hole is available for the positive electrode terminal 23 or the negative electrode terminal 24 to pass through. The second through-hole 275 communicates with the second accommodation cavity 274, so that the second tab portion 2222b can be connected to the positive electrode terminal 23 or the negative electrode terminal 24 to input or output the electrical energy of the stacked-type electrode assembly 22.

The second connecting portions 2222a of a plurality of second electrode plates 222 converge toward one side of the stacked-type electrode assembly 22 along the first direction X, so as to converge the plurality of second connecting portions 2222a at one end of the stacked-type electrode assembly 22 to form a second convergence region 2222c. In addition, a matching second insulation piece 27 covers the fourth bevel face 2222e of the second convergence region 2222c correspondingly to implement dielectrical isolation between the second tab portion 2222b and the shell 21 and between the second convergence region 2222c and the shell 21. Such a structure of the battery cell 20 can reduce the manufacturing difficulty of the second insulation piece 27, reduce the manufacturing cost, and improve the production efficiency.

According to some embodiments of this application, this application further provides a battery 100. The battery includes at least one battery cell 20 disclosed in any one of the above technical solutions.

As an example, the number of battery cells 20 may be one or more.

According to some embodiments of this application, this application further provides an electrical device. The electrical device includes the battery 100 disclosed in any one of the foregoing technical solutions, and the battery 100 is configured to provide electrical energy for the electrical device.

The electrical device may be any device or system in which the battery 100 is applied.

According to some embodiments of this application, as shown in FIG. 3 to FIG. 7, this application provides a stacked-type electrode assembly 22. The stacked-type electrode assembly 22 includes a first electrode plate 221, a separation piece 223, and a second electrode plate 222 stacked along a first direction X. The separation piece 223 is disposed between the first electrode plate 221 and the second electrode plate 222. The first electrode plate 221 includes a first coated region 2211 and a first blank region 2212 arranged along a second direction Y. The first blank region 2212 includes a first connecting portion 2212a and a first tab portion 2212b. The first connecting portion 2212a connects the first coated region 2211 and the first tab portion 2212b. A dimension of the first connecting portion 2212a is larger than a dimension of the first tab portion 2212b along a third direction Z. The first direction X, the second direction Y, and the third direction Z are perpendicular to each other. The first connecting portions 2212a of a plurality of first electrode plates 221 converge at one end of the stacked-type electrode assembly 22 in the second direction Y to form a first convergence region 2212c. The first tab portions 2212b of the plurality of first electrode plates 221 are stacked and protrude beyond the first convergence region 2212c along the second direction Y. The second electrode plate 222 includes a second coated region 2221 and a second blank region 2222 arranged along a second direction Y. The second blank region 2222 includes a second connecting portion 2222a and a second tab portion 2222b. The second connecting portion 2222a connects the second coated region 2221 and the second tab portion 2222b. The dimension of the second connecting portion 2222a is larger than the dimension of the second tab portion 2222b along the third direction Z. The second connecting portions 2222a of a plurality of second electrode plates 222 converge at one end of the stacked-type electrode assembly 22 in the second direction Y to form a second convergence region 2222c, where the end is oriented away from the first convergence region 2212c. The second tab portions 2222b of the plurality of second electrode plates 222 are stacked and protrude as a whole beyond the second convergence region 2222c along the second direction Y. The first convergence region 2212c and the second convergence region 2222c protrude beyond two ends of the separation piece 223 along the second direction Y respectively. The first convergence region 2212c and the second convergence region 2222c each are 2 mm to 4 mm in thickness.

An embodiment of this application further provides a method for manufacturing a stacked-type electrode assembly 22. Referring to FIG. 20, FIG. 20 is a schematic flowchart of a method for manufacturing a stacked-type electrode assembly 22 according to some embodiments of this application. The manufacturing method includes the following steps:
S100: Stacking a first electrode plate 221 and a second electrode plate 222 of opposite polarities along a first direction X, where the first electrode plate 221 includes a first coated region 2211 and a first blank region 2212 arranged along a second direction Y, and the second direction Y is perpendicular to the first direction X; and
S200: Converging and cutting the first blank regions 2212 of a plurality of first electrode plates 221.

In the steps above, the first electrode plate 221 is a negative electrode plate, and the second electrode plate 222 is a positive electrode plate. Definitely, in some other embodiments, the first electrode plate 221 may be a positive electrode plate, and accordingly, the second electrode plate 222 may be a negative electrode plate.

Optionally, in step S200: after the first blank regions 2212 of a plurality of first electrode plates 221 are converged and cut, the first blank regions 2212 form a first connecting portion 2212a and a first tab portion 2212b. The first connecting portion 2212a connects the first coated region 2211 and the first tab portion 2212b. A dimension of the first connecting portion 2212a is larger than a dimension of the first tab portion 2212b along a third direction Z. The third direction Z is perpendicular to the first direction X and the second direction Y. The first connecting portions 2212a of a plurality of first electrode plates 221 converge at one end of the stacked-type electrode assembly 22 in the second direction Y to form a first convergence region 2212c. The first tab portions 2212b of the plurality of first electrode plates 221 are stacked and protrude as a whole beyond the first convergence region 2212c along the second direction Y.

It is hereby noted that the second electrode plate 222 may be manufactured by the same manufacturing method as the first electrode plate 221.

In the above manufacturing method, after the first electrode plate 221 and the second electrode plate 222 are stacked together, the first blank regions 2212 of the plurality of first electrode plates 221 are converged and then the first blank regions 2212 of the plurality of first electrode plates 221 are cut uniformly to form tabs configured to output or input the electrical energy of the stacked-type electrode assembly 22, thereby eliminating the process of cutting individual first electrode plates 221 before stacking the first electrode plate 221 and the second electrode plate 222. This manufacturing method can effectively reduce the phenomena of dislocation or lap-joint of a plurality of first electrode plates 221 on the one hand, thereby improving the working performance and safety performance of the stacked-type electrode assembly 22. On the other hand, this method can significantly optimize the production rhythm of the stacked-type electrode assembly 22, and improve the production efficiency of the stacked-type electrode assembly 22.

In some embodiments, referring to FIG. 21, FIG. 21 is a schematic flowchart of step S200 in the method for manufacturing a stacked-type electrode assembly 22 shown in FIG. 20. The step S200 "converging and cutting the first blank regions 2212 of a plurality of first electrode plates 221" includes:
S210: Converging the first blank regions 2212 of a plurality of first electrode plates 221;
S220: Welding the first blank regions 2212 of the plurality of first electrode plates 221 to form a to-be-cut portion; and
S230: Cutting the to-be-cut portion.

In the above manufacturing method, a plurality of converged first blank regions 2212 are welded to form a to-be-cut portion, and then the to-be-cut portion are uniformly cut. On the one hand, this manufacturing method facilitates the cutting of the to-be-cut portion, thereby reducing the difficulty of cutting. On the other hand, the method can effectively reduce the phenomena of slippage or dislocation of the plurality of converged first blank regions 2212 during the cutting, thereby improving the cutting quality of the plurality of first blank regions 2212, and in turn, improving the production quality of the stacked-type electrode assembly 22.

Optionally, the device for cutting the to-be-cut portion may be a laser cutting device or a die-cutting device.

As an example, the laser cutting device includes a laser cutting gun and a die. The die is configured to hold the stacked-type electrode assembly 22. The laser cutting gun is configured to follow a trajectory of the die to cut the stacked-type electrode assembly 22. The specific structure of the laser cutting device may be learned from the related art, the details of which are omitted herein.

As an example, the die-cutting device includes a blade and a punch. The blade is connected to the punch, and the punch is configured to drive the blade to die-cut the stacked-type electrode assembly 22. The specific structure of the die-cutting device may be learned from the related art, the details of which are omitted herein.

It is hereby noted that, for the related structure of the stacked-type electrode assembly 22 manufactured by the manufacturing method disclosed in each of the above embodiments, reference may be made to the descriptions of the stacked-type electrode assembly 22 disclosed in each of the preceding embodiments, the details of which are omitted herein.

It is hereby noted that to the extent that no conflict occurs, the embodiments of this application and the features in the embodiments may be combined with each other.

What is described above is merely exemplary embodiments of this application, but is not intended to limit this application. To a person skilled in the art, various modifications and variations may be made to this application. Any and all modifications, equivalent replacements, improvements, and the like made without departing from the spirit and principles of this application still fall within the protection scope of this application.

## Claims

1. A stacked-type electrode assembly, comprising a first electrode plate and a second electrode plate of opposite polarities, wherein the first electrode plate and the second electrode plate are stacked along a first direction;
the first electrode plate comprises a first coated region and a first blank region arranged along a second direction, the first blank region comprises a first connecting portion and a first tab portion, the first connecting portion connects the first coated region and the first tab portion, and a dimension of the first connecting portion is larger than a dimension of the first tab portion along a third direction; and the first direction, the second direction, and the third direction are perpendicular to each other; and
the first connecting portions of a plurality of first electrode plates converge at one end of the stacked-type electrode assembly in the second direction to form a first convergence region, and the first tab portions of the plurality of first electrode plates are stacked and protrude beyond the first convergence region along the second direction.

2. The stacked-type electrode assembly according to claim 1, wherein the stacked-type electrode assembly further comprises:
a separation piece, disposed between the first electrode plate and the second electrode plate, and is configured to separate the first electrode plate from the second electrode plate, the separation piece covers the first coated region along the first direction, and the first connecting portion protrudes beyond the separation piece along the second direction.

3. The stacked-type electrode assembly according to claim 1 or 2, wherein a thickness of the first convergence region in the second direction is 2 mm to 4 mm.

4. The stacked-type electrode assembly according to any one of claims 1 to 3, wherein the second electrode plate comprises a second coated region and a second blank region arranged along the second direction;
the second blank region comprises a second connecting portion and a second tab portion, the second connecting portion connects the second coated region and the second tab portion, and a dimension of the second connecting portion is larger than a dimension of the second tab portion along the third direction; and
the second connecting portions of a plurality of second electrode plates converge at one end of the stacked-type electrode assembly in the second direction to form a second convergence region, wherein the end is oriented away from the first convergence region; and the second tab portions of the plurality of second electrode plates are stacked and protrude as a whole beyond the second convergence region along the second direction.

5. The stacked-type electrode assembly according to any one of claims 1 to 3, wherein the second electrode plate comprises a second coated region and a second blank region arranged along the third direction;
the second blank region comprises a second connecting portion and a second tab portion, the second connecting portion connects the second coated region and the second tab portion, and a dimension of the second connecting portion is larger than a dimension of the second tab portion along the second direction; and
the second connecting portions of a plurality of second electrode plates converge at one end of the stacked-type electrode assembly in the third direction to form a second convergence region, and the second tab portions of the plurality of second electrode plates are stacked and protrude as a whole beyond the second convergence region along the third direction.

6. A battery cell, comprising:
a shell; and
the stacked-type electrode assembly according to any one of claims 1 to 5, wherein the stacked-type electrode assembly is accommodated in the shell.

7. The battery cell according to claim 6, wherein the battery cell further comprises:
a first insulation piece, covering the first convergence region, wherein the first insulation piece is configured to insulate the first tab portion from the shell.

8. The battery cell according to claim 7, wherein, along the first direction, the first connecting portions of a plurality of first electrode plates converge from one side toward an opposite side of the stacked-type electrode assembly to form a first bevel face in the first convergence region, and the first insulation piece covers the first bevel face.

9. The battery cell according to claim 7, wherein, along the first direction, the first connecting portions of a plurality of first electrode plates converge from both sides of the stacked-type electrode assembly toward a middle of the electrode assembly to form two second bevel faces in the first convergence region, and the first insulation piece covers the two second bevel faces.

10. The battery cell according to claim 9, wherein the first insulation piece comprises:
two first insulators, covering the two second bevel faces respectively, wherein the two first insulators are arranged opposite to each other along the first direction and are spliced with each other, and a first clearance is formed between the two first insulators and is available for the first tab portion to pass through.

11. A battery, comprising at least one battery cell according to any one of claims 6 to 10.

12. An electrical device, comprising the battery according to claim 11, wherein the battery is configured to provide electrical energy.

13. A method for manufacturing a stacked-type electrode assembly, comprising:
stacking a first electrode plate and a second electrode plate of opposite polarities along a first direction, wherein the first electrode plate comprises a first coated region and a first blank region arranged along a second direction, and the second direction is perpendicular to the first direction; and
converging and cutting the first blank regions of a plurality of first electrode plates.

14. The method for manufacturing a stacked-type electrode assembly according to claim 13, wherein the converging and cutting the first blank regions of a plurality of first electrode plates comprise:
converging the first blank regions of a plurality of first electrode plates;
welding the first blank regions of the plurality of first electrode plates to form a to-be-cut portion; and
cutting the to-be-cut portion.

15. The method for manufacturing a stacked-type electrode assembly according to claim 13 or 14, wherein, after the first blank regions of a plurality of first electrode plates are converged and cut, the first blank region forms a first connecting portion and a first tab portion, the first connecting portion connects the first coated region and the first tab portion, and a dimension of the first connecting portion is larger than a dimension of the first tab portion along a third direction; and the third direction is perpendicular to the first direction and the second direction; and
the first connecting portions of a plurality of first electrode plates converge at one end of the stacked-type electrode assembly in the second direction to form a first convergence region, and the first tab portions of the plurality of first electrode plates are stacked and protrude as a whole beyond the first convergence region along the second direction.
